# EUROPEAN PATENT SPECIFICATION

(11) **EP 0 317 508 B1**
(45) Date of publication and mention of the grant of the patent: **23.06.1993**
(21) Application number: 88810761.2
(22) Date of filing: 08.11.1988
(51) Int. Cl.: C07C 211/13, C07C 257/10, C07C 257/04, C08K 5/18, C08K 5/29, C09K 15/18, C09K 15/22

(54) **Aminic orthoester stabilized compositions**
Durch aminische Orthoester stabilisierte Zusammensetzungen
Compositions stabilisées par un orthoester aminique

(30) Priority: 16.11.1987 US 121181
(43) Date of publication of application: 24.05.1989
(73) Proprietor: CIBA-GEIGY AG, 4002 Basel (CH)
(72) Inventor: Benjamin, Linda A., Horsham, PA 19044 (US); Babiarz, Joseph E., Dobbs Ferry, NY 10522 (US); Pastor, Stephen D., CH-4053 Basle (CH)

(56) References cited:
- EP-A- 0 153 616
- US-A- 4 085 062
- US-A- 4 152 348
- JOURNAL OF ORGANIC CHEMISTRY, vol. 34, no. 5, May 1989, pages 1192-1197, Washington, DC, US; J.P. CHUPP et al.: "Structural factors influencing rotational isomerism and alkylation properties in some alfa-haloacetanilides"
- CHEMICAL COMMUNICATIONS, 1967, pages 256-257, London, GB; K.M. WELLMAN et al.: "cis-trans-isomerism in N-arylformamidinium salts"
- PATENT ABSTRACTS OF JAPAN, vol. 3, no. 157, 22nd December 1979; & JP-A-54 132 508
- NUCLEAR TECHNOLOGY, vol. 63, 1963, pages 431-441; YU-KEUNG SZE et al.: "Oxidation of Pu(III) by nitric acid in tri-n-butyl phosphate solutions. Part II. Chemical methods for the suppression of oxidation to improve plutonium separation in contactor operation"

## Description

This invention relates to new compositions, new compounds and a new method for stabilizing an organic material against oxidative, thermal and actinic degradation.

Organic polymeric materials such as plastics and resins are subject to thermal, oxidative and photodegradation. A great variety of stabilizers are known in the art for stabilizing a diversity of substrates. Their effectiveness varies depending upon the causes of degradation and the substrate stabilized. For example, stabilizer effectiveness in reducing volatility may depend upon preventing bond scission in the substrate molecule. Limiting embrittlement and retaining elasticity in a polymer or rubber may require prevention of excessive crosslinking and/or chain scission. Prevention of discoloration may require inhibiting reactions which yield new chromophores or color bodies in the substrate or stabilizer. Problems of process stability and incompatibility must also be considered.

Various aminic orthoesters are known in the art. For example, triphenyltriaminomethane derivatives are disclosed and characterized in C. Lewis et al., J. Org. Chem., 12, 303-307 (1947). Tri-N-aryl-N-alkylaminomethane derivatives and corresponding formamidines are disclosed in U.S. 3,214,471 as pesticides and polymerization inhibitors as well as in O. Tsuge et al., Bull. Chem. Soc. Jpn., 44, 2171 (1971); J. Scheeren, Recl. Trav. Chim. Pays Bas., 88 (3), 289 (1969); and D. Clemens, J. Am. Chem. Soc., 83, 2588 (1961). Finally, tri-N,N-dialkylaminomethane derivatives and corresponding formamidines are disclosed in H. Bredereck et al., Angew. Chem. Intern. Ed. Engl., 5, 132 (1966); H. Bredereck et al., Chem. Ber., 101, 1885 (1968); and H. Bohme, Chem. Ber., 94, 3109 (1961). These various articles are directed to synthesis and mechanistic studies.

It has now been determined that the compositions of this invention exhibit a variety of desirable properties stemming from the presence therein of the indicated aminic orthoester derivatives. Thus, the compounds serve to protect various substrates such as polyolefins, elastomers and lubricating oils against the adverse effects of oxidative and thermal degradation. They are most effective as process stabilizers in polyolefin compositions which may contain metal salts of fatty acids and which also contain a phenolic antioxidant.

Thus the primary object of this invention is to provide compositions of organic materials stabilized against oxidative, thermal and actinic degradation by the presence therein of a class of aminic orthoester derivatives.

It is a further object to provide a specific class of novel aminic orthoester derivatives which likewise exhibits a broad range of improved stabilization performance characteristics.

Various other objects and advantages of this invention will become evident from the following description thereof.

The present invention provides a composition of matter of a synthetic polymer or lubricant and at least one compound of the formulae 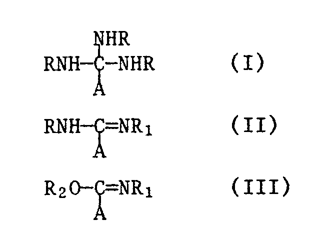
wherein R and R₁ independently are C₁-C₃₀alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂cycloalkyl, C₆-C₁₀ aryl or said aryl substituted by C₁-C₁₈ alkyl, halogen and/or -NHR₃ wherein R₃ is C₁-C₁₈ alkyl or phenyl;
R₂ is C₁-C₃₀ alkyl; and
A is hydrogen, C₁-C₃₀ alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂ cycloalkyl, C₆-C₁₀ aryl or C₆-C₁₀ aryl substituted by C₁-C₁₈ alkyl.

The R and R₁ groups are preferably straight chain or branched alkyl of 1 to 18 carbon atoms such as methyl, ethyl, n-propyl, n-butyl, n-octyl, 2-ethylhexyl, decyl, dodecyl and octadecyl, cyclopentyl and cyclohexyl; phenyl; and phenyl substituted by C₁-C₈ alkyl and/or halogen or -NH-phenyl. R₂ is preferably C₁-C₁₈alkyl as exemplified above. The above noted R and R₁ group definition equally applies to the A groups, with A preferably being hydrogen. Halogen is preferably chlorine.

Preferred formula I compounds have all R groups identical and all R groups are phenyl or C₁-C₈ alkyl-substituted phenyl, with A being hydrogen.

Preferred formula II compounds have R=R₁ and R and R₁ are phenyl or phenyl substituted by C₁-C₈-alkyl or by -NH-phenyl, with A being hydrogen.

Preferred formula III compounds have R₁ as phenyl or C₁-C₈ alkyl-substituted phenyl, R₂ as C₁-₈ alkyl and A as hydrogen.

Especially preferred are compositions containing at least one of the compounds
1,1,1-tris(anilino)methane,
1,1,1-tris(4-methylanilino)methane,
1,1,1-tris(4-tert-butylanilino)methane,
1,1,1-tris(2-ethylanilino)methane,
N,N'-bis(4-anilinophenyl)formamidine,
N,N'-bis(2,6-dimethylphenyl)formamidine or
ethyl-N-(2-tert-butyl-6-methylphenyl)imidate.

Processes for preparing the compounds are described in the above mentioned publications. In general, the appropriately substituted amine is reacted with a trialkyl orthoformate, preferably triethyl orthoformate, at elevated temperatures to give the desired product. Preparation of the corresponding formamidines and imidates is largely dictated by the nature of the substitution on the amine reactants.

The instant invention also includes a method for stabilizing a synthetic polymer or lubricant which comprises incorporating into said synthetic polymer or lubricant at least one compound corresponding to the formulae I, II or III as described above.

Certain of the aminic orthoesters are novel and thus form part of the instant invention.

The novel compounds correspond to the formula 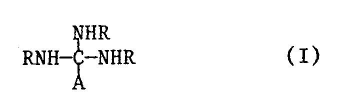
wherein R is C₁-C₃₀ alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂ cycloalkyl, C₆-C₁₀ aryl or said aryl substituted by C₁-C₁₈ alkyl, halogen or/and -NHR₃ wherein R₃ is C₁-C₁₈ alkyl or phenyl;
and
A is hydrogen, C₁-C₃₀ alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂ cycloalkyl, C₆-C₁₀ aryl or C₆-C₁₀ aryl substituted by C₁-C₁₈ alkyl, with the proviso that A is not hydrogen when all R are phenyl or halogen-substituted phenyl.

The above noted illustrative material equally applies to these compounds.

Preferred compounds correspond to formulae I, wherein R is C₁-C₁₈ alkyl, phenyl or phenyl substituted by C₁-C₈ alkyl or -NH-phenyl.

Preferred compounds correspond to formulae I, wherein A is hydrogen.

Preferred compounds correspond to formula I wherein the R groups are identical and are C₁-C₈ alkyl-substituted phenyl and A is hydrogen.

Especially preferred are the compounds corresponding to formula I
1,1,1-Tris(4-methylanilino)methane,
1,1,1-Tris(4-tert-butylanilino)methane,
1,1,1-Tris(2-ethylanilino)methane,
The compounds utilized in the present invention are particularly effective in stabilizing synthetic polymers and lubricants.

In general synthetic polymers and lubricants which can be stabilized by the compounds of formulae I, II and III include
1. Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE) and linear low density polyethylene (LLDPE).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefines and diolefines with each other or with other vinyl monomers, such as, for example, ethylene/propylene, linear low density polyethylene (LLDPE) and its mixtures with low density polyethylene (LDPE), propylene/butene-1, ethylene/hexene, ethylene/ethylpentene, ethylene/heptene, ethylene/octene, propylene/isobutylene, ethylene/butene-1, propylene/butadiene, isobutylene/isoprene, ethylene/alkyl acrylates, ethylene/alkyl methacrylates, ethylene/vinyl acetate or ethylene/ acrylic acid copolymers and their salts (ionomers) and terpolymers of ethylene with propylene and a diene, such as hexadiene, dicyclopentadiene or ethylidene-norbornene; as well as mixtures of such copolymers and their mixtures with polymers mentioned in 1) above, for example polypropylene/ethylene-propylene-copolymers, LDPE/EVA, LDPE/EAA, LLDPE/EVA and LLDPE/EAA.
3a. Hydrocarbon resins (for example C₅-C₉) and hydrogenated modifications thereof (for example tackyfiers).
4. Polystyrene, poly-(p-methylstyrene), poly-(α-methylstyrene).
5. Copolymers of styrene or α-methylstyrene with dienes or acrylic derivatives, such as, for example, styrene/butadiene, styrene/ acrylonitrile, styrene/alkyl methacrylate, styrene/maleic anhydride, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/ styrene, styrene/ isoprene/styrene, styrene/ethylene/butylene/ styrene or styrene/ ethylene/propylene/ styrene.
6. Graft copolymers of styrene or α-methylstyrene such as, for example, styrene on polybutadiene, styrene on polybutadiene-styrene or polybutadiene-acrylonitrile; styrene and acrylonitrile (or methacrylonitrile) on polybutadiene; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with the copolymers listed under 5), for instance the copolymer mixtures known as ABS-, MBS-, ASA- or AES-polymers.
7. Halogen-containing polymers, such as polychloroprene, chlorinated rubbers, chlorinated or sulfochlorinated polyethylene, epichlorohydrin homo- and copolymers, polymers from halogen-containing vinyl compounds,as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate or vinylidene chloride/vinyl acetate copolymers.
8. Polymers which are derived from α,β-unsaturated acids and derivatives thereof, such as polyacrylates and polymethacrylates, polyacrylamide and polyacrylonitrile.
9. Copolymers from the monomers mentioned under 8) with each other or with other unsaturated monomers, such as, for instance, acrylonitrile/butadiene, acrylonitrile/alkyl acrylate, acrylonitrile/ alkoxyalkyl acrylate or acrylonitrile/vinyl halogenide copolymers or acrylonitrile/alkyl methacrylate/butadiene terpolymers.
10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinyl butyral, polyallyl phthalate or polyallylmelamine; as well as their copolymers with olefins mentioned in 1) above.
11. Homopolymers and copolymers of cyclic ethers, such as polyalkylene glycols, polyethylene oxide, polypropylene oxide or copolymers thereof with bis-glycidyl ethers.
12. Polyacetals, such as polyoxymethylene and those polyoxymethylenes which contain ethylene oxide as a comonomer; polyacetals modified with thermoplastic polyurethanes, acrylates or MBS.
13. Polyphenylene oxides and sulfides, and mixtures of polyphenylene oxides with polystyrene or polyamides.
14. Polyurethanes which are derived from polyethers, polyesters or polybutadienes with terminal hydroxyl groups on the one side and aliphatic or aromatic polyisocyanates on the other side, as well as precursors thereof (polyisocyanates, polyols or prepolymers).
15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene diamine and adipic acid; polyamides prepared from hexamethylenediamine and isophthalic or/and terephthalic acid and optionally an elastomer as modifier, for example poly-2,4,4,-trimethylhexamethylene terephthalamide or poly-m-phenylene isophthalamide. Further copolymers of the aforementioned polyamides with polyolefins, olefin copolymers, ionomers or chemically bonded or grafted elastomers; or with polyethers, such as for instance, with polyethylene glycols, polypropylene glycols or polytetramethylene glycols. Polyamides or copolyamides modified with EPDM or ABS. Polyamides condensed during processing (RIM-polyamide systems).
16. Polyureas, polyimides and polyamide-imides.
17. Polyesters which are derived from dicarboxylic acids and diols and/or from hydroxycarboxylic acids or the corresponding lactones, such as polyethylene terephthalate, polybutylene terephthalate, poly-1,4-dimethylolcyclohexane terephthalate, poly-[2,2,-(4-hydroxyphenyl)-propane] terephthalate and polyhydroxybenzoates as well as block-copolyetheresters derived from polyethers having hydroxyl end groups.
18. Polycarbonates and polyester-carbonates.
19. Polysulfones, polyether-sulfones and polyether-ketones.
20. Crosslinked polymers which are derived from aldehydes on the one hand and phenols, ureas and melamines on the other hand, such as phenol/formaldehyde resins, urea/formaldehyde resins and melamine/ formaldehyde resins.
21. Drying and non-drying alkyd resins.
22. Unsaturated polyester resins which are derived from copolyesters of saturated and unsaturated dicarboxylic acids with polyhydric alcohols and vinyl compounds as crosslinking agents, and also halogen-containing modifications thereof of low inflammability.
23. Thermosetting acrylic resins, derived from substituted acrylic esters, such as epoxy-acrylates, urethane-acrylates or polyester-acrylates.
24. Alkyd resins, polyester resins or acrylate resins in admixture with melamine resins, urea resins, polyisocyanates or epoxide resins as crosslinking agents.
25. Crosslinked epoxide resins which are derived from polyepoxides, for example from bis-glycidyl ethers or from cycloaliphatic diepoxides.
26. Natural polymers, such as cellulose, rubber, gelatine and derivatives thereof which are chemically modified in a polymer-homologous manner, such as cellulose acetates, cellulose propionates and cellulose butyrates, or the cellulose ethers, such as methylcellulose; rosins and their derivatives.
27. Mixtures of polymers as mentioned above, for example PP/EPDM, Polyamide 6/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPE/HIPS, PPE/PA 6.6 and copolymers, PA/HDPE, PA/PP, PA/PPE.
28. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellithates) and also mixtures of synthetic esters with mineral oils in any weight ratios, which materials may be used as plasticizer for polymers or as textile spinning oils, as well as aqueous emulsions of such materials.
29. Aqueous emulsions of natural or synthetic rubber, e.g. natural latex or latices of carboxylated styrene/butadiene copolymers.

Compositions in which the compounds of the present invention are useful are e.g. synthetic polymers, for example polyolefin homopolymers or copolymers or elastomers.

Substrates in which these compounds are particularly useful are polyolefins such as polyethylene and polypropylene; polystyrene, including impact polystyrene, ABS resin, SBR, isoprene, as well as natural rubber, polyesters including polyethylene terephthalate, including copolymers.

In general, the compounds of the present invention are employed in from about 0.01 to about 5 % by weight of the stabilized composition, although this will vary with the particular substrate and application. An advantageous range is from about 0.05 to about 2 %, and especially 0.1 to about 1 %.

The stabilizers of the instant invention may readily be incorporated into the organic polymers by conventional techniques, at any convenient stage prior to the manufacture of shaped articles therefrom. For example, the stabilizer may be mixed with the polymer in dry powder form, or a suspension or emulsion of the stabilizer may be mixed with a solution, suspension, or emulsion of the polymer. The resulting stabilized polymer compositions of the invention may optionally also contain various conventional additives, such as the following.
1. Antioxidants
1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol.
1.2. Alkylated hydroquinones,for example 2,6-di-tert-butyl-4-methoxyphenol, 2,5-di-tert-butylhydroquinone, 2,5-di-tert-amylhydroquinone, 2,6-diphenyl-4-octadecyloxyphenol.
1.3. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol).
1.4. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4methylphenyl] terephthalate.
1.5. Benzyl compounds, for example 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-di-tert-butyl-4-hydroxybenzylmercaptoacetate, bis(4-tert-butyl-3-hydroxy-2,6-dimethylbenzyl) dithiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris-(3,5-dicyclohexyl-4-hydroxybenzyl)isocyanurate.
1.6. Acylaminophenols, for example lauric acid 4-hydroxyanilide, stearic acid 4-hydroxyanilide, 2,4-bis(octylmercapto)-6-(3,5-di-tert-butyl-4-hydroxyanilino)-s-triazine, octyl N-(3,5-di-tert-butyl-4-hydroxyphenyl)-carbamate.
1.7. Esters of β-(3,5-di-tert-butyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N'-bis(hydroxyethyl)oxalic acid diamide.
1.8. Esters of β-(5-tert-butyl-4-hydroxy-3-methylphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N'-bis(hydroxyethyl)oxalic acid diamide.
1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N'-bis(hydroxyethyl)oxalic acid diamide.
1.10. Amides of β-(3,5-di-tert-butyl-4-hydroxyphenyl)propionic acid e.g. N,N'-bis(3,5-di-tert-butyl-4-hydroxyphenylpropionyl)hexamethylene-diamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.
2. UV absorbers and light stabilisers
2.1. 2-(2'-Hydroxyphenyl)benzotriazoles, for example the 5'-methyl, 3',5'-di-tert-butyl, 5'-tert-butyl, 5'-(1,1,3,3-tetramethylbutyl), 5-chloro-3',5'-di-tert-butyl, 5-chloro-3'-tert-butyl-5'-methyl, 3'-secbutyl-5'-tert-butyl, 4'-octoxy, 3',5'-di-tert-amyl and 3',5'-bis(α,α-dimethylbenzyl) derivatives.
2.2. 2-Hydroxybenzophenones, for example the 4-hydroxy, 4-methoxy, 4-octoxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)-resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.
2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxycinnamate, methyl α-carbomethoxy-p-methoxycinnamate and N-(β-carbomethoxy-β-cyanovinyl)-2-methylindoline.
2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzyl-phosphonic acid monoalkyl esters, e.g. of the methyl or ethyl ester, nickel complexes of ketoximes, e.g. of 2-hydroxy-4-methyl-phenyl undecyl ketoxime, nickel complexes of 1-phenyl-4-lauroyl-5-hydroxypyrazole, with or without additional ligands.
2.6. Sterically hindered amines, for example bis(2,2,6,6-tetramethylpiperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the condensation product of 1-(2-hydroxyethyl)-2,2,6,6-tetramethyl-4-hydroxypiperidine and succinic acid, the condensation product of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1'-(1,2-ethanediyl)bis-(3,3,5,5-tetramethylpiperazinone).
2.7. Oxalic acid diamides, for example 4,4'-dioctyloxyoxanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)oxalamide, 2-ethoxy-5-tert-butyl-2'-ethyloxanilide and its mixture with 2-ethoxy-2'-ethyl-5,4'-di-tert-butyloxanilide and mixtures of orthoand para-methoxy-disubstituted oxanilides and mixtures of o-and p-ethoxy-disubstituted oxanilides.
3. Metal deactivators, for example N,N'-diphenyloxalic acid diamide, N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalodihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tertbutylphenyl) pentaerythritol diphosphite, tristearyl sorbitol triphosphite, tetrakis-(2,4-di-tert-butylphenyl) 4,4'-biphenylene diphosphonite, 3,9-bis(2,4-di-tert-butylphenoxy)-2,4,8,10-tetraoxa-3,9-diphosphaspiro[5.5]undecane.
5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
6. Polyamide stabilisers, for example, copper salts in combination with iodides and/or phosphorus compounds and salts of divalent manganese.
7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.
8. Nucleating agents, for example, 4-tert.butyl-benzoic acid, adipic acid, diphenylacetic acid.
9. Fillers and reinforcing agents, for example, calcium carbonate, silicates, glass fibres, asbestos, talc, kaolin, mica, barium sulfate, metal oxides and hydroxydes, carbon black, graphite.
10. Other additives, for example, plasticisers, lubricants, emulsifiers, pigments, optical brighteners, flameproofing agents, antistatic agents, blowing agents and thiosynergistics such as dilaurylthiodipropionate or distearylthiodipropionate.

Still another group of coadditives which can be advantageously used in conjunction with the instant aminic orthoesters are the hydroxylamines such as N,N-dialkylhydroxylamines and the N,N-diaralkylhydroxylamines. Examples of such hydroxylamines include the N,N-dialkylhydroxylamines with alkyl of 1 to 18 carbon atoms, preferably alkyl of 8 to 18 carbon atoms; and N,N-dibenzylhydroxylamine and substituted N,N-dibenzylhydroxylamines where the benzyl moiety is substituted by alkyl of 1 to 12 carbon atoms or by alpha,alpha-dimethylbenzyl.

Other substrates in which the compounds of the present invention are useful are lubricants, preferably lubricating oils such as those derived from mineral oil.

Lubricating oils are those known to the art-skilled and described e.g. in Schewe-Kobek, "Schmiermittel-Taschenbuch" (Huethig-Verlag, Heidelberg, 1974) and D. Klamann, "Schmierstoffe und verwandte Produkte", (Verlag Chemie, Weinheim 1982).

The lubricants can contain other additives which are added in order to further improve the basic properties of lubricants; these include: antioxidants, metal passivators, rust inhibitors, viscosity index improvers, pour-point depressors, dispersants, detergents, thickeners, biocides, defoamers, demulsifiers and emulsifiers and high-pressure additives and friction reducers.

Examples of phenolic antioxidants as additional additives are mentioned above in the list "Antioxidants" 1.1.-1.10. Other additives are:

### Examples of amine antioxidants:

N,N′-Di-isopropyl-p-phenylenediamine
N,N′-di-sec.-butyl-p-phenylenediamine
N,N′-bis(1,4-dimethyl-pentyl)-p-phenylenediamine
N,N′-bis(1-ethyl-3-methyl-pentyl)-p-phenylenediamine
N,N′-bis(1-methyl-heptyl)-p-phenylenediamine
N,N′-dicyclohexyl-p-phenylenediamine
N,N′-diphenyl-p-phenylenediamine
N,N′-di-(naphthyl-2-)-p-phenylenediamine
N-isopropyl-N′-phenyl-p-phenylenediamine
N-(1,3-dimethyl-butyl)-N′-phenyl-p-phenylenediamine
N-(1-methyl-heptyl)-N′-phenyl-p-phenylenediamine
N-cyclohexyl-N′-phenyl-p-phenylenediamine
4-(p-toluene-sulfonamido)-diphenylamine
N,N′-dimethyl-N,N′-di-sec-butyl-p-phenylenediamine
diphenylamine
N-allyldiphenylamine
4-isopropoxy-diphenylamine
N-phenyl-1-naphthylamine
N-phenyl-2-naphthylamine
octylated diphenylamine, e.g. p,p′-di-tert-octyldiphenylamine
4-n-butylaminophenol
4-butyrylamino-phenol
4-nonanoylamino-phenol
4-dodecanoylamino-phenol
4-octadecanoylamino-phenol
di-(4-methoxy-phenyl)-amine
2,6-di-tert-butyl-4-dimethylamino-methyl-phenol
2,4′-diamino-diphenylmethane
4,4′-diamino-diphenylmethane
N,N,N′,N′-tetramethyl-4,4′-diamino-diphenylmethane
1,2-di-(phenylamino)-ethane
1,2-di-[2-methyl-phenyl)-amino]-ethane
1,3-di-(phenylamino)-propane
(o-tolyl)-biguanide
di-[4-(1′,3′-dimethyl-butyl)-phenyl]amine
tert-octylated N-phenyl-1-naphthylamine
mixture of mono- and dialkylated tert-butyl-/tert-octyldiphenylamines
2,3-dihydro-3,3-dimethyl-4H-1,4-benzothiazine
phenothiazine
n-allylphenothiazine

### Examples for other antioxidants:

Aliphatic or aromatic phosphites, esters of thiodipropionic acid or of thiodiacetic acid, or salts of dithiocarbamic or dithiophosphoric acid.

### Examples of metal deactivators, for example for copper, are:

Triazoles, benzotriazoles and derivatives thereof, tolutriazole and derivatives thereof, 2-mercaptobenzothiazole, 2-mercaptobenzotriazole, 2,5-dimercaptothiadiazole, 2,5-dimercaptobenzotriazole, 5,5'-methylene-bis-benzotriazole, 4,5,6,7-tetrahydrobenzotriazole, salicylidene-propylenediamine and salicylaminoguanidine and salts thereof.

### Examples of rust inhibitors are:

a) Organic acids, their esters, metal salts and anhydrides, e.g.
   N-oleoyl-sarcosine, sorbitan-mono-oleate, lead-naphthenate, alkenyl-succinic acids and -anhydrides, e.g. dodecenyl-succinic acid anhydride, succinic acid partial esters and amides, 4-nonyl-phenoxy-acetic acid.
b) Nitrogen-containing compounds, e.g.
   I. Primary, secondary or tertiary aliphatic or cycloaliphatic amines and amine-salts of organic and inorganic acids, e.g. oil-soluble alkyl-ammonium carboxylates
   II. Heterocyclic compounds, e.g. substituted imidazolines and oxazolines
c) Phosphorus-containing compounds, e.g.
   Amine salts of phosphonic acid or phosphoric acid partial esters, zinc dialkyldithio phosphates
d) Sulfur-containing compounds, e.g.
   Barium-dinonylnaphthalene-n-sulfonates, calcium petroleum sulfonates

### Examples of viscosity-index improvers are:

Polyacrylates, polymethacrylates, vinylpyrrolidone/methacrylate-copolymers, polyvinylpyrrolidones, polybutenes, olefin-copolymers, styrene/acrylate-copolymers, polyethers

### Examples of pour-point depressants are:

Polymethacrylates, alkylated naphthalene derivatives

### Examples of dispersants/surfactants are:

Polybutenylsuccinic acid-amides or -imides, polybutenylphosphonic acid derivatives, basic magnesium-, calcium-, and bariumsulfonates and -phenolates.

### Examples of anti-wear additives are:

Sulfur- and/or phosphorus- and/or halogen-containing compounds eg sulfurised vegetable oils, zinc dialkyldithiophosphates, tritolylphosphate, chlorinated paraffins, alkyl- and aryldi- and trisulfides, triphenylphosphorothionate, diethanolaminomethyltolutriazole, di(2-ethylhexyl)-aminomethyltolutriazole.

The following examples illustrate the embodiments of this invention. Thus, they describe the preparation of various aminic orthoesters, including those forming part of the invention, and of stabilized compositions. In these examples, all parts given are by weight unless otherwise specified.

### Example 1: 1,1,1-Tris(anilino)methane

A solution of 10.0 g (0.11 mol) of aniline in 5.3 g (0.036 mol) of triethyl orthoformate is heated to reflux and the resultant ethanol is distilled off. The residue is slurried with cyclohexane to give 8.2 g (79 %) of a white solid, mp. 138 - 139°C.

| | | | |
|---|---|---|---|
| Anal. Calcd. for C₁₉H₁₉N₃: | C, 78.9; | H, 6.6; | N, 14.5. |
| Found: | C, 78,9; | H, 6.2; | N, 14.2. |

### Example 2: 1,1,1-Tris(4-methylanilino)methane

The procedure of Example 1 is repeated using 13.3 g (0.124 mol) of 4-methylaniline and 5.9 g (0.04 mol) of triethyl orthoformate. The residue is slurried with cyclohexane to give 6.7 g (51 %) of a white solid, mp. 130 - 131°C.

| | | | |
|---|---|---|---|
| Anal. Calcd. for C₂₂H₂₅N₃: | C, 79.7; | H, 7.6; | N, 12.7. |
| Found: | C, 79.7; | H, 7.2; | N, 12.4. |

### Example 3: 1,1,1-Tris(4-tert-butylanilino)methane

The procedure of Example 1 is repeated using 7.0 g (0.047 mol) of 4-tert-butylaniline and 3.7 g (0.025 mol) of triethyl orthoformate. The residue is recrystallized from hexane/cyclohexane to give 4.9 g (68 %) of a white solid, mp. 1578 - 158°C.

| | | | |
|---|---|---|---|
| Anal. Calcd. for C₃₁H₄₃N₃: | C, 81,4; | H, 9.5; | N, 9.2. |
| Found: | C, 81.8; | H, 9.3; | N, 8.9. |

### Example 4: 1,1,1-Tris(2-ethylanilino)methane

The procedure of Example 1 is repeated using 10.0 g (0.083 mol) of 2-ethylaniline and 4.5 g (0.03 mol) of triethyl orthoformate. The residue is recrystallized from hexane to give 5.3 g (51 %) of a white solid, mp. 76 - 78°C.

| | | | |
|---|---|---|---|
| Anal. Calcd. for C₂₅H₃₁N₃: | C, 80.4; | H, 8.4; | N, 11.3. |
| Found: | C, 80.8; | H, 8.1; | N, 11.1. |

### Example 5: N,N′-Bis(4-anilinophenyl)formamidine

The procedure of Example 1 is repeated using 10.0 g (0.054 mol) of N-phenyl-1,4-phenylenediamine and 3.3 g (0.22 mol) of triethyl orthoformate. The residue is slurried with ethanol to give 7.4 g (83 %) of a brown solid, mp. 173 - 175°C.

| | | | |
|---|---|---|---|
| Anal. Calcd. for C₂₅H₂₂N₄: | C, 79.3; | H, 5.9; | N, 14.8. |
| Found: | C, 79.2; | H, 5.7; | N, 14.8. |

### Example 6: N,N′-Bis(2,6-dimethylphenyl)formamidine

The procedure of Example 1 is repeated using 18.8 g (0.154 mol)of 2,6-dimethylaniline and 8.5 g (0.057 mol) of triethyl orthoformate. The residue is slurried with hexane to give 1.4 g (11 %) of a white solid, mp. 174 - 176°C.

| | | | |
|---|---|---|---|
| Anal. Calcd. for C₁₇H₂₀N₂: | C, 80.9; | H, 8.0; | N, 11.1. |
| Found: | C, 80.5; | H, 7.8; | N, 11.1. |

### Example 7: Ethyl-N-(2-tert-butyl-6-methylphenyl)imidate

The procedure of Example 1 is repeated using 8.6 g (0.053 mol) of 2-tert-butyl-6-methylaniline and 2.9 g (0.02 mol) of triethyl orthoformate. The residue is distilled giving 7.8 g (67 %) of a colorless oil, bp. 89 to 91°C (0.01 mm).

### Example 8: Processing of Polypropylene

| Base Formulation | |
|---|---|
| Polypropylene* | 100 parts |
| Calcium Stearate | 0.10 parts |

| | |
|---|---|
| * Profax 6501 from Himont | |

Stabilizers are solvent blended into polypropylene as solutions in methylene chloride and after removal of the solvent by evaporation at reduced pressure, the resin is extruded using the following extruder conditions:

| | Temperature (°C) |
|---|---|
| Cylinder #1 | 232 |
| Cylinder #2 | 246 |
| Cylinder #3 | 260 |
| Die #1 | 260 |
| Die #2 | 260 |
| Die #3 | 260 |
| RPM 100 | |

The melt flow rate (MFR) is determined by ASTM method 1238 condition L. The melt flow rate is a measure of the molecular weight for a specific type of polymer. The results are shown in the following table.

| Stabilizer | Conc. (% by wt.) | MFR (g/10 min.) After Extrusion | |
|---|---|---|---|
| | | 1 | 5 |
| Base | - | 4.8 | 23.7 |
| Example 1 | 0.05 | 2.2 | 3.9 |
| Example 2 | 0.05 | 1.8 | 2.9 |

### Example 9:

Example 8 is repeated except that the stabilizers are dry blended into the polypropylene prior to extrusion. The results are noted below.

| Additive | Conc. (% by wt.) | MFR (g/10 min.) After Extrusion | |
|---|---|---|---|
| | | 1 | 5 |
| Base | - | 4.8 | 8.9 |
| Example 3 | 0.05 | 2.6 | 3.2 |
| Example 4 | 0.05 | 2.2 | 3.2 |
| Example 5 | 0.05 | 2.2 | 3.0 |
| Example 6 | 0.05 | 1.9 | 2.0 |

The data in Examples 8 and 9 thus illustrate the effectiveness of the instant compounds as process stabilizers in polypropylene.

### Example 10: Processing of Neoprene

A polychloroprene masterbatch is prepared in a Banbury BR type internal mixer using the following recipe.

| | |
|---|---|
| Neoprene GRT (DuPont) | 100 parts |
| Stearic Acid | 1 phr |
| Magnesium Oxide | 4 phr |
| Carbon Black | 58 phr |
| Polyethylene (Allied Chemical) | 3 phr |
| Sundex 790 oil (Sun Oil) | 10 phr |

The components are mixed at high speed for one minute with full cooling. The additives and zinc oxide (5 phr) are added to the masterbatch on a cold two roll mix. To the samples according to the present invention 2 % per weight of the instant compounds are added. Test samples are press cured at 160°C for 20 minutes. Aging is conducted in a circulating air oven at 120°C for 168 hours using ASTM Die C tensile bars. The tensile strength (T.S.) (in Kg/mm²) and elongation (in %) values are determined according to ASTM D412-75.

| | Conc. | Unaged | | 120°C Oven Aging Aged for 168 hours | | |
|---|---|---|---|---|---|---|
| Stabilizer | (% by wt.) | T.S. | % Elong. | T.S. | % Elong. | % Retention of Elong. |
| Base | - | 2.0 | 250 | 1.0 | 29 | 11.6 |
| Example 5 | 2.0 | 2.3 | 264 | 1.2 | 54 | 20.4 |

These data further illustrate the effective stabilization activity of the instant compounds.

Summarizing, it is seen that this invention provides organic materials stabilized against degradation by the presence therein of various aminic orthoester derivatives. Variations may be made in proportions, procedure and materials without departing from the scope of the instant invention as defined by the instant claims.

## Claims

1. A composition of matter comprising a synthetic polymer or lubricant and at least one compound of the formulae 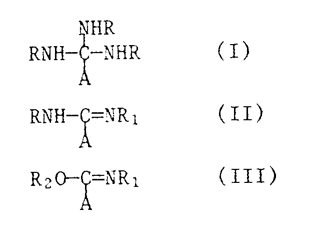 wherein R and R₁ independently are C₁-C₃₀alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂cycloalkyl, C₆-C₁₀ aryl or said aryl substituted by C₁-C₁₈ alkyl, halogen and/or -NHR₃ wherein R₃ is C₁-C₁₈ alkyl or phenyl;
R₂ is C₁-C₃₀ alkyl; and
A is hydrogen, C₁-C₃₀ alkyl, C₁-C₃₀ alkyl substituted by alkoxy of 1 to 12 carbon atoms, by amino, by aryl of 6 to 10 carbon atoms or by arylthio of 6 to 10 carbon atoms; C₅-C₁₂ cycloalkyl, C₆-C₁₀ aryl or C₆-C₁₀ aryl substituted by C₁-C₁₈ alkyl.

2. The composition of claim 1, wherein R and R₁ independently are C₁-C₁₈alkyl, cyclohexyl, cyclopentyl, phenyl or phenyl substituted by C₁-C₈alkyl, halogen and/or -NH-phenyl.

3. The composition of claim 1, wherein A is hydrogen.

4. The composition of claim 1 which contains a compound of formula I wherein the R groups are identical and are phenyl or C₁-C₈alkyl-substituted phenyl and A is hydrogen.

5. The composition of claim 1 which contains a compound of formula II wherein R and R₁ are identical and are phenyl or phenyl substituted by C₁-C₈alkyl or -NH-phenyl, and A is hydrogen.

6. The composition of claim 1, which contains a compound of formula III wherein R₁ is phenyl or C₁-C₈alkyl-substituted phenyl, R₂ is C₁-C₈alkyl and A is hydrogen.

7. The composition of claim 1 which contains at least one of the compounds
1,1,1-tris(anilino)methane,
1,1,1-tris(4-methylanilino)methane,
1,1,1-tris(4-tert-butylanilino)methane,
1,1,1-tris(2-ethylanilino)methane,
N,N'-bis(4-anilinophenyl)formamidine,
N,N'-bis(2,6-dimethylphenyl)formamidine or
ethyl-N-(2-tert-butyl-6-methylphenyl)imidate.

8. The composition of claim 1, wherein the synthetic polymer or lubricant is a lubricating oil.

9. The composition of claim 1, wherein the synthetic polymer is a polyolefin homopolymer or copolymer.

10. The composition of claim 1, wherein the synthetic polymer is an elastomer.

11. A method for stabilizing a synthetic polymer or lubricant which comprises incorporating into said synthetic polymer or lubricant at least one compound of formulae I, II and/or III according to claim 1.

12. A compound of the formula 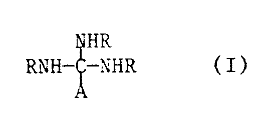 wherein R is C₁-C₃₀alkyl, C₁-C₃₀alkyl substituted by alkoxy of 1 to 12 carbon atoms, by amino, by aryl of 6 to 10 carbon atoms or by arylthio of 6 to 10 carbon atoms; C₅-C₁₂cycloalkyl, C₆-C₁₀aryl or said aryl substituted by C₁-C₁₈alkyl, halogen and/or -NHR₃ wherein R₃ is C₁-C₁₈alkyl or phenyl;
and
A is hydrogen, C₁-C₃₀alkyl, C₁-C₃₀alkyl substituted by alkoxy of 1 to 12 carbon atoms, by amino, by aryl of 6 to 10 carbon atoms or by arylthio of 6 to 10 carbon atoms; C₅-C₁₂cycloalkyl, C₆-C₁₀aryl or C₆-C₁₀aryl substituted by C₁-C₁₈alkyl, with the proviso that A is not hydrogen when all R are phenyl or halogen-substituted phenyl.

13. The compound of claim 12, wherein R is C₁-C₁₈alkyl, cyclohexyl, cyclopentyl, phenyl or phenyl substituted by C₁-C₈alkyl, halogen and/or -NH-phenyl.

14. The compound of claim 12, wherein A is hydrogen.

15. The compound of claim 12 wherein the R groups are identical and are C₁-C₈ alkyl-substituted phenyl and A is hydrogen.

16. 1,1,1-Tris(4-methylanilino)methane or
1,1,1-Tris(4-tert-butylanilino)methane or
1,1,1-Tris(2-ethylanilino)methane according to claim 12.

## Patentansprüche

1. Zusammensetzung, umfassend ein synthetisches Polymer oder Schmiermittel und mindestens eine Verbindung der Formeln 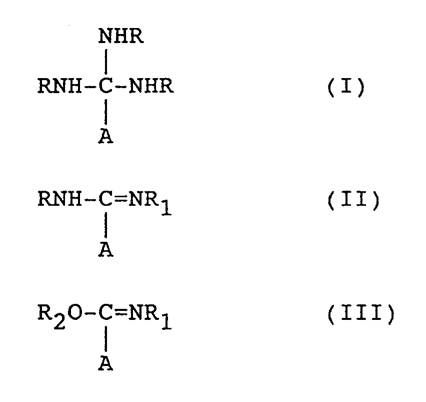 worin R und R₁ unabhängig voneinander C₁-C₃₀-Alkyl, C₁-C₃₀-Alkyl, substituiert mit Alkoxy mit 1 bis 12 Kohlenstoffatomen, mit Amino, mit Aryl mit 6 bis 10 Kohlenstoffatomen oder mit Arylthio mit 6 bis 10 Kohlenstoffatomen; C₅-C₁₂-Cycloalkyl, C₆-C₁₀-Aryl oder dieses Aryl, substituiert mit C₁-C₁₈-Alkyl, Halogen und/oder -NHR₃, worin R₃ C₁-C₁₈-Alkyl oder Phenyl bedeutet, darstellen;
R₂ C₁-C₃₀-Alkyl bedeutet; und
A ein Wasserstoffatom, C₁-C₃₀-Alkyl, C₁-C₃₀-Alkyl, substituiert mit Alkoxy mit 1 bis 12 Kohlenstoffatomen, mit Amino, mit Aryl mit 6 bis 10 Kohlenstoffatomen oder mit Arylthio mit 6 bis 10 Kohlenstoffatomen; C₅-C₁₂-Cycloalkyl, C₆-C₁₀-Aryl oder C₆-C₁₀-Aryl, substituiert mit C₁-C₁₈-Alkyl, bedeutet.

2. Zusammensetzung nach Anspruch 1, wobei R und R₁ unabhängig voneinander C₁-C₁₈-Alkyl, Cyclohexyl, Cyclopentyl, Phenyl oder Phenyl, substituiert mit C₁-C₈-Alkyl, Halogen und/oder -NH-Phenyl bedeuten.

3. Zusammensetzung nach Anspruch 1, wobei A ein Wasserstoffatom ist.

4. Zusammensetzung nach Anspruch 1, enthaltend eine Verbindung der Formel I, in der die Gruppen R identisch sind und Phenyl oder C₁-C₈-alkylsubstituiertes Phenyl bedeuten und A ein Wasserstoffatom ist.

5. Zusammensetzung nach Anspruch 1, enthaltend eine Verbindung der Formel II, in der R und R₁ identisch sind und Phenyl oder mit C₁-C₈-Alkyl oder -NH-Phenyl substituiertes Phenyl bedeuten und A ein Wasserstoffatom ist.

6. Zusammensetzung nach Anspruch 1, enthaltend eine Verbindung der Formel III, in der R₁ Phenyl oder C₁-C₈-alkylsubstituiertes Phenyl bedeutet, R₂ C₁-C₈-Alkyl darstellt und A ein Wasserstoffatom ist.

7. Zusammensetzung nach Anspruch 1, enthaltend mindestens eine der Verbindungen
1,1,1-Tris(anilino)methan,
1,1,1-Tris(4-methylanilino)methan,
1,1,1-Tris(4-tert.butylanilino)methan,
1,1,1-Tris(2-ethylanilino)methan,
N,N'-Bis(4-anilinophenyl)formamidin,
N,N'-Bis(2,6-dimethylphenyl)formamidin oder
Ethyl-N-(2-tert.butyl-6-methylphenyl)imidat.

8. Zusammensetzung nach Anspruch 1, wobei das synthetische Polymer oder das Schmiermittel ein Schmieröl ist.

9. Zusammensetzung nach Anspruch 1, wobei das synthetische Polymer ein Polyolefinhomopolymer oder ein Copolymer ist.

10. Zusammensetzung nach Anspruch 1, wobei das synthetische Polymer ein Elastomer ist.

11. Verfahren zur Stabilisierung eines synthetischen Polymers oder Schmiermittels, umfassend die Eingabe mindestens einer Verbindung der Formeln I, II und/oder III gemäß Anspruch 1 in das synthetische Polymer oder das Schmiermittel.

12. Verbindung der Formel 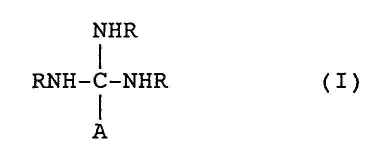 worin R C₁-C₃₀-Alkyl, C₁-C₃₀-Alkyl, substituiert mit Alkoxy mit 1 bis 12 Kohlenstoffatomen, mit Amino, mit Aryl mit 6 bis 10 Kohlenstoffatomen oder mit Arylthio mit 6 bis 10 Kohlenstoffatomen; C₅-C₁₂-Cycloalkyl, C₆-C₁₀-Aryl oder dieses Aryl, substituiert mit C₁-C₁₈-Alkyl, Halogen und/oder -NHR₃, worin R₃ C₁-C₁₈-Alkyl oder Phenyl bedeutet, darstellt; und
A ein Wasserstoffatom, C₁-C₃₀-Alkyl, C₁-C₃₀-Alkyl, substituiert mit Alkoxy mit 1 bis 12 Kohlenstoffatomen, mit Amino, mit Aryl mit 6 bis 10 Kohlenstoffatomen oder mit Arylthio mit 6 bis 10 Kohlenstoffatomen; C₅-C₁₂-Cycloalkyl, C₆-C₁₀-Aryl oder C₆-C₁₀-Aryl, substituiert mit C₁-C₁₈-Alkyl, mit der Maßgabe, daß A nicht Wasserstoff bedeutet, wenn alle Reste R Phenyl oder halogensubstituiertes Phenyl bedeuten.

13. Verbindung nach Anspruch 12, wobei R C₁-C₁₈-Alkyl, Cyclohexyl, Cyclopentyl, Phenyl oder Phenyl, substituiert mit C₁-C₈-Alkyl, Halogen und/oder -NH-Phenyl bedeutet.

14. Verbindung nach Anspruch 12, wobei A ein Wasserstoffatom ist.

15. Verbindung nach Anspruch 12, wobei die Gruppen R identisch sind und C₁-C₈-alkylsubstituiertes Phenyl bedeuten und A ein Wasserstoffatom ist.

16. 1,1,1-Tris(4-methylanilino)methan oder
1,1,1-Tris(4-tert.butylanilino)methan oder
1,1,1-Tris(2-ethylanilino)methan gemäß Anspruch 12.

## Revendications

1. Une composition de matière comprenant un lubrifiant ou un polymère synthétique et au moins un composé de formule 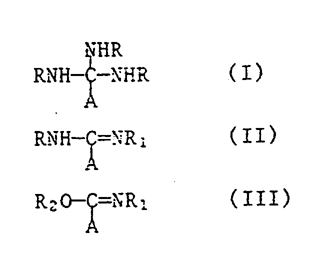 dans laquelle
R et R₁ sont indépendamment un groupement alkyle en C₁-C₃₀, un groupement alkyle en C₁-C₃₀ substitué par un groupement alkoxy de 1 à 12 atomes de carbone, par un groupement amino, par un groupement aryle de 6 à 10 atomes de carbone ou par un groupement arylthio de 6 à 10 atomes de carbone; un groupement cycloalkyle en C₅-C₁₂, un groupement aryle en C₆-C₁₀ ou ledit groupement aryle substitué par un groupement alkyle en C₁-C₁₈, un atome d'halogène et/ou un groupement -NHR₃ dans lequel R₃ est un groupement alkyle en C₁-C₁₈ ou un groupement phényle;
R₂ est un groupement alkyle en C₁-C₃₀, et
A est un hydrogène, un groupement alkyle en C₁-C₃₀, un groupement alkyle en C₁-C₃₀ substitué par un groupement alkoxy de 1 à 12 atomes de carbone, par un groupement amino, par un groupement aryle de 6 à 10 atomes de carbone ou par un groupement arylthio de 6 à 10 atomes de carbone; un groupement cycloalkyle en C₅-C₁₂, un groupement aryle en C₆-C₁₀ ou un groupement aryle en C₆-C₁₀ substitué par un groupement alkyle en C₁-C₁₈.

2. La composition de la revendication 1, dans laquelle R et R1 sont indépendamment un groupement alkyle en C₁-C₁₈, cyclohexyle, cyclopentyle, phényle ou phényle substitué par un groupement alkyle en C₁-C₈, un halogène et/ou un groupement -NH-phényle;

3. La composition de la revendication 1, dans laquelle A est un hydrogène.

4. La composition de la revendication 1 qui renferme un composé de formule I dans laquelle les groupements R sont identiques et sont un groupement phényle ou phényle substitué par un groupement alkyle en C₁-C₈ et A est un hydrogène.

5. La composition de la revendication 1 qui renferme un composé de formule II dans laquelle R et R₁ sont identiques et sont un groupement phényle ou phényle substitué par un groupement alkyle en C₁-C₈ ou un groupement -NH-phényle, et A est un hydrogène.

6. La composition de la revendication 1, qui renferme un composé de formule III dans laquelle R₁ est un groupement phényle ou phényle substitué par un groupement alkyle en C₁-C₈, R₂ est un groupement alkyle en C₁-C₈ et A est un hydrogène.

7. La composition de la revendication 1 qui renferme au moins un des composés
1,1,1,-tris(anilino)méthane,
1,1,1,-tris(4-méthylanilino)méthane,
1,1,1,-tris(4-tert-butylanilino)méthane,
1,1,1,-tris(2-éthylanilino)méthane,
N,N'-bis(4-anilinophényl)formamidine
N,N'-bis(2,6-diméthylphényl)formamidine ou
éthyl-N-(2-tert-butyl-6-méthylphényl)imidate.

8. La composition de la revendication 1, dans laquelle le lubrifiant ou le polymère synthétique est une huile lubrifiante.

9. La composition de la revendication 1, dans laquelle le polymère synthétique est un un homopolymère ou un copolymère de polyoléfine.

10. La composition de la revendication 1, dans laquelle le polymère synthétique est un élastomère.

11. Méthode pour la stabilisation d'un lubrifiant ou d'un polymère synthétique qui comprend l'incorporation dans le lubrifiant ou le polymère synthétique d'au moins un composé de formule I, II et/ou III selon la revendication 1.

12. Un composé de formule 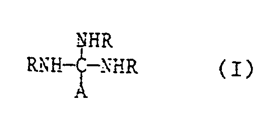 dans laquelle R est un groupement alkyle en C₁-C₃₀, un groupement alkyle en C₁-C₃₀ substitué par un groupement alkoxy de 1 à 12 atomes de carbone, par un groupement amino, par un groupement aryle de 6 à 10 atomes de carbone ou par un groupement arylthio de 6 à 10 atomes de carbone; un groupement cycloalkyle en C₅-C₁₂, un groupement aryle en C₆-C₁₀ ou ledit groupement aryle substitué par un groupement alkyle en C₁-C₁₈, un atome d'halogène et/ou un groupement -NHR₃ dans lequel R₃ est un groupement alkyle en C₁-C₁₈ ou un groupement phényle ; et
A est un hydrogène, un groupement alkyle en C₁-C₃₀, un groupement alkyle en C₁-C₃₀ substitué par un groupement alkoxy de 1 à 12 atomes de carbone, par un groupement amino, par un groupement aryle de 6 à 10 atomes de carbone ou par un groupement arylthio de 6 à 10 atomes de carbone; un groupement cycloalkyle en C₅-C₁₂, un groupement aryle en C₆-C₁₀ ou un groupement aryle en C₆-C₁₀ substitué par un groupement alkyle en C₁-C₁₈, à condition que A ne soit pas un hydrogène quand tous les R sont un groupement phényle ou phényle substitué par un halogène.

13. Le composé de la revendication 12, dans lequel R est un groupement alkyle en C₁-C₁₈, cyclohexyle, cyclopentyle, phényle ou phényle substitué par un groupement alkyle en C₁-C₈ et/ou un groupement -NH-phényle.

14. Le composé de la revendication 12, dans lequel A est un hydrogène.

15. Le composé de la revendication 12 dans lequel les groupes R sont identiques et sont des groupements phényle substitué par un groupement alkyle en C₁-C₈ et A est un hydrogène.

16. 1,1,1-Tris(4-méthylanilino)méthane ou
1,1,1-Tris(4-tert-butylanilino)méthane ou
1,1,1-Tris(2-éthylanilino)méthane,
selon la revendication 12.
